# EUROPÄISCHE PATENTANMELDUNG

(11) **EP 4 528 565 A1**
(43) Veröffentlichungstag der Anmeldung: **26.03.2025**
(21) Anmeldenummer: 23198423.8
(22) Anmeldetag: 20.09.2023
(51) Int. Cl.: G06F 21/62, G06F 21/33, H04L 9/32, H04L 9/40

(54) **VERFAHREN UND ANORDNUNG ZUR BENUTZERBEZOGENEN FREISCHALTUNG EINER FUNKTION EINER ANWENDUNG EINER INDUSTRIELLEN AUTOMATISIERUNGSKOMPONENTE**

(71) Anmelder: Siemens Aktiengesellschaft, 80333 München (DE)
(72) Erfinder: Zeltner, Armin, 91085 Weisendorf (DE); Höfele, Markus, 68259 Mannheim (DE); Kob, Peter, 90562 Heroldsberg (DE)
(74) Vertreter: Siemens Patent Attorneys

(57) **Zusammenfassung**

Verfahren und Anordnung zur benutzerbezogenen Freischaltung einer Funktion einer Anwendung einer industriellen Automatisierungskomponente (ED), insbesondere eines industriellen Edge-Gerätes, wobei anhand einer benutzerbezogenen Autorisierung entschieden wird, ob ein Benutzer (U) diese Funktion ausführen darf und die Funktion dem Benutzer zur Verfügung gestellt wird. Dabei wird zu der Funktion ein digitales Funktionszertifikat (FCU) erstellt und signiert, anschließend wird für einen oder jeden berechtigten Benutzer der Funktion ein Autorisierungszertifikat (ACU) erstellt, wobei eine Identifikation des Benutzers oder der Benutzer und das signierte Funktionszertifikat (FCS) in das Autorisierungszertifikat (ACU) eingebettet werden, wonach das Autorisierungszertifikat (ACU) mit dem eingebetteten Funktionszertifikat (FCS) und der eingebetteten Identifikation signiert wird, das signierte Autorisierungszertifikat (ACS) auf die Automatisierungskomponente (ED) übertragen oder dieser mittels eines zentralen Speichers zur Verfügung gestellt wird, und durch die Automatisierungskomponente (ED) oder durch die Anwendung die Gültigkeit des Autorisierungszertifikates (ACS) geprüft und die Identität des an der Automatisierungskomponente (ED) angemeldeten Benutzers (U) mit der Identifikation im Autorisierungszertifikat (ACS) verglichen und die Funktion dem Benutzer (U) freigeschaltet wird. Damit können alle Zertifikate (z.B. Autorisierungszertifikat, Funktionszertifikat) über Standardprotokolle erstellt, verteilt, geprüft und widerrufen werden.

## Beschreibung

Die Erfindung betrifft ein Verfahren zur benutzerbezogenen Freischaltung einer Funktion einer Anwendung einer industriellen Automatisierungskomponente gemäß dem Oberbegriff des Patentanspruchs 1, ein Industrielles Automatisierungssystem gemäß dem Oberbegriff des Patentanspruchs 8 und ein Qualifizierungssystem (Trainingssystem, Testsystem) für einen Benutzer einer industriellen Automatisierungskomponente gemäß dem Oberbegriff des Patentanspruchs 9.

Es gibt keine Verknüpfung zwischen der Benutzerverwaltung einer industriellen Automatisierungskomponente, z.B. industrielle Edge-Komponente (Edge-Gerät, Edge-Device), und der Aktivierung bzw. Freischaltung von Funktionen, welche die Edge Komponente mittels einer Anwendung (Anwender- oder Automatisierungsprogramm) zur Verfügung stellt. Eine Funktion kann dabei beispielsweise eine bestimmte Funktionalität einer durch die Anwendung gesteuerten Produktionseinrichtung sein, kann aber auch eine Funktionalität wie beispielsweise der Zugang zu einem Konfigurierungsmenü oder der Zugriff auf besonders geschützte Daten etc. sein. Insbesondere können hier solche Funktionen einer Anwendung betrachtet werden, deren Nutzung eine besondere Qualifikation ("skills") bzw. den Nachweis einer solchen Qualifikation erfordern.

Zugriffsberechtigungen auf Anwendungen und ggf. einzelne Funktionen der Anwendungen werden, wenn überhaupt, über Konfigurationsdateien/API oder auch Kennwörter erteilt. Solche Ansätze sind jedoch in einer "Zero Trust"-Umgebung nicht anwendbar. Bei cloudbasierten Diensten gilt das "Zero Trust" Sicherheitsmodell als Standard. Das bedeutet, dass sich jeder Teilnehmer am Netzwerk authentifizieren muss, es gibt kein Vertrauen mehr ohne Nachweis ("never trust, always verify").

Ansätze mit RBAC (Role Based Access Control), also rollenbasierte Zugriffsrechteverwaltung, verschieben nur das Problem in die Ebene des Rollenmanagements. Damit ist es zum Beispiel nicht möglich, ohne Zuweisung einer passenden Rolle zu einem Benutzer in einem Benutzerverwaltungssystem kurzfristig eine Berechtigung zu erteilen. Zudem muss das Benutzerverwaltungssystem immer verfügbar und erreichbar sein, um die Berechtigung des Benutzers seitens der Anwendung bzw. des Gerätes (Automatisierungskomponente) prüfen zu können.

Es ist also eine Aufgabe der vorliegenden Erfindung, Benutzergranular einzelne Funktionen einer Anwendung freizuschalten und im laufenden Betrieb unabhängig von einer eigenen Benutzerverwaltung die Berechtigung des jeweiligen Benutzers zur Nutzung der Funktion überprüfbar zu machen.

Es ist eine Kernidee der erfindungsgemäßen Lösung dieser Aufgabe, eine Autorisierung eines Benutzers in einem digitalen Zertifikat zu dokumentieren, welches rückführbar ist auf ein Basis- oder "Root"-Zertifikat und dessen Integrität bzw. Gültigkeit somit unabhängig von einer eigenen Benutzerverwaltung oder dergleichen jederzeit lokal überprüft werden kann. Dabei wird in dem Fall, in dem ein Benutzer die Voraussetzungen für die Nutzung bzw. den Zugriff auf eine Funktion erfüllt, für diesen ein Zertifikat erstellt, welches mittels einer Zertifizierungskette auf ein Root-Zertifikat bzw. eine Root-Autorisierungs- bzw. Zertifizierungsstelle bezogen und somit prüfbar ist und welches die betreffende Funktion(en) definiert und welches signiert und damit gegen Manipulation geschützt ist.

Die Aufgabe wird insbesondere mit einem Verfahren nach Patentanspruch 1, mit einem Automatisierungssystem gemäß Patentanspruch 8 und durch ein Qualifizierungssystem (Trainingssystem, Testsystem) nach Patentanspruch 9 gelöst.

Dabei wird ein Verfahren zur benutzerbezogenen Freischaltung einer Funktion einer Anwendung einer industriellen Automatisierungskomponente, insbesondere eines industriellen Edge-Gerätes, vorgeschlagen, wobei anhand einer benutzerbezogenen Autorisierung durch die Automatisierungskomponente oder die Anwendung beim Zugriff auf die Funktion entschieden wird, ob der Benutzer diese Funktion ausführen darf, und danach die Funktion dem Benutzer zur Verfügung gestellt wird. Dabei wird in einem ersten Schritt zu der Funktion ein digitales Funktionszertifikat erstellt, in einem zweiten Schritt wird das Funktionszertifikat signiert, in einem dritten Schritt wird für einen oder jeden berechtigten Benutzer der Funktion ein Autorisierungszertifikat erstellt, wobei eine Identifikation (z.B. eine Name oder eine eindeutige Identifizierungsnummer oder ein anderer Identifikator) des Benutzers oder der Benutzer und das signierte Funktionszertifikat in das Autorisierungszertifikat eingebettet werden, in einem vierten Schritt wird das Autorisierungszertifikat mit dem eingebetteten Funktionszertifikat und der eingebetteten Identifikation signiert, in einem fünften Schritt wird das signierte Autorisierungszertifikat auf die Automatisierungskomponente übertragen oder dieser mittels eines zentralen Speichers zur Verfügung gestellt, und in einem sechsten Schritt wird durch die Automatisierungskomponente oder durch die Anwendung die Gültigkeit des Autorisierungszertifikates geprüft und die Identität des an der Automatisierungskomponente angemeldeten Benutzers mit der Identifikation (Identifikator, ID, Benutzername o.ä.) im Autorisierungszertifikat verglichen und im Falle einer erfolgreichen Prüfung und Vergleich (insbesondere Übereinstimmung der tatsächlichen Benutzer-Identität mit der Identifikation im Autorisierungszertifikat) die Funktion dem Benutzer freigeschaltet. Damit können alle Zertifikate (z.B. Autorisierungszertifikat, Funktionszertifikat) über Standardprotokolle erstellt, verteilt, geprüft und widerrufen werden. Es braucht kein Rollenmanagement in der (Edge-) Anwendung erfolgen, da sie nur die Funktion und den Benutzer anhand von Autorisierungszertifikat, Autorisierungs-/Zertifizierungsstelle und Funktionszertifikat überprüft, welche Funktionen oder Berechtigungen vom Hersteller bzw. einer anderen verantwortlichen Stelle (z.B. nach Schulung) dem konkreten Benutzer zur Verfügung gestellt werden.

Die Aufgabe wird außerdem durch industrielles Automatisierungssystem mit einem Engineeringssystem zur Erstellung oder Verwaltung einer industriellen Anwendung mit zumindest einer Funktion gelöst, wobei das Automatisierungssystem zur Durchführung eines der Verfahren aus den Patentansprüchen 1 bis 7 eingerichtet ist. Mit diesem Automatisierungssystem können die bereits anhand des Verfahrens erläuterten Vorteile erzielt werden.

Weiter wird die Aufgabe durch ein Qualifizierungssystem (Trainingssystem, Testsystem) für einen Benutzer einer industriellen Automatisierungskomponente gelöst, wobei für den an dem Qualifizierungssystem (Trainingssystem, Testsystem) registrierten Benutzer für die Berechtigung der Nutzung oder des Zugriffs zumindest einer Funktion einer Anwendung oder eines anderen "assets" der Automatisierungskomponente ein der Funktion zugeordnetes Trainingsprogramm oder Prüfprogramm zum Nachweis notwendiger Kenntnisse ("skills") und/oder - insbesondere für nicht-humane Benutzer - technischer Voraussetzungen und/oder Vorhandensein notwendiger Zertikate, Firewalls, Anti-Malware-Software, Verschlüsselungstechnologie oder dergleichen, verfügbar ist. Dabei ist das Qualifizierungssystem (Trainingssystem, Testsystem) dazu eingerichtet, nach einem erfolgreichen Abschluss des Trainings für diesen Benutzer - oder im Falle eines maschinellen Benutzers nach einer erfolgreichen Qualifizierung der technischen Eigenschaften dieser Maschine - den dritten, vierten und fünften Schritt des Verfahrens gemäß Patentanspruch 1 auszuführen. Auch mit diesem Qualifizierungssystem (Trainingssystem, Testsystem) können die bereits anhand des Verfahrens erläuterten Vorteile erzielt werden.

Vorteilhafte Ausgestaltungen des erfindungsgemäßen Verfahrens sind in den abhängigen Patentansprüchen angegeben. Dabei beschriebene Merkmale und Vorteile gelten sinngemäß auch für das erfindungsgemäße Automatisierungssystem und für das erfindungsgemäße Qualifizierungssystem (Trainingssystem, Testsystem). Die vorteilhaften Ausgestaltungen können sowohl einzeln als auch in sinnvoller Kombination miteinander realisiert werden.

In einer vorteilhaften Ausgestaltung wird in dem ersten Schritt in das Funktionszertifikat ein signierter öffentlicher Schlüssel einer ersten Autorisierungsstelle eingebettet, wonach in dem zweiten Schritt die Signierung des Funktionszertifikates durch eine zweite Autorisierungsstelle erfolgt. Dies hat den Vorteil, dass bereits bei der Erstellung des Funktionszertifikates, beispielsweise durch den Programmierer oder Hersteller der Anwendung bzw. der Funktion, mittels dieses signierten öffentlichen Schlüssels festgelegt werden kann, welche Autorisierungsstelle berechtigt ist, ein Autorisierungszertifikat für die genannte Funktion unter Verwendung des gegenständlichen Funktionszertifikates zu erstellen. Die Autorisierungsstelle wird also umgekehrt nur dann ein Autorisierungszertifikat unter Verwendung des betreffenden Funktionszertifikates erstellen, wenn in dem Funktionszertifikat der eigene öffentliche Schlüssel in signierter Form enthalten ist. Während in einem einfachen Fall, in dem beispielsweise ein Hersteller sowohl das Funktionszertifikat als auch das Autorisierungszertifikat erstellt, nur eine Zertifizierungsstelle notwendig ist und damit die erste Zertifizierungsstelle und die zweite Zertifizierungsstelle identisch sein können, ermöglicht es die hier vorgeschlagene Variante, für die Erstellung der Funktion und damit des zugehörigen Funktionszertifikates und für die Erstellung des Autorisierungszertifikates unterschiedliche Instanzen (beispielsweise Unternehmen) zu betrauen. In diesem Szenario wird in dem vierten Schritt die Gültigkeit der eingebetteten Signatur der ersten Autorisierungsstelle überprüft und das Autorisierungszertifikat anschließend, ggf. nach Prüfung weiterer Voraussetzungen, durch die erste Autorisierungsstelle für den Benutzer signiert.

Vorteilhaft wird in dem dritten Schritt die Identifikation des Benutzers eingebettet, indem die Autorisierungsnachricht jeweils mit einem Schlüssel oder Zertifikat des betreffenden Benutzers signiert ("übersigniert") wird. Das hat den Vorteil, dass in das bereits signierte Funktionszertifikat nicht mehr eingegriffen werden muss und somit die bestehende Signatur ihre Gültigkeit behält. Weiterer Vorteil besteht darin, dass eine nahezu unbegrenzte Anzahl benutzerbezogener Signaturen zu beliebigen Zeitpunkten hinzugefügt und auch wieder zurückgezogen werden kann, ohne die bestehenden Signaturen der anderen Benutzer und die ursprüngliche Signatur des Funktionszertifikates zu beeinträchtigen. Besonders vorteilhaft ist es dabei, wenn nicht ein dem Benutzer selbst zugänglicher Schlüssel verwendet wird, sondern separate Schlüssel, die insbesondere durch die erste Autorisierungsstelle oder durch eine dafür vorgesehene Instanz (zum Beispiel Trainingscenter oder dergleichen) verwaltet werden, sodass ein Benutzer nicht missbräuchlich sich selbst für die Nutzung der Funktion autorisieren kann.

In einer besonders vorteilhaften Variante wird in dem dritten Schritt vor dem Hinzufügen der Identifikation des Benutzers der Nachweis über eine der Funktion zugeordneten Qualifikation des Benutzers überprüft. Für einen humanen Nutzer bedeutet dies, dass beispielsweise eine Qualifikation in Form eines erfolgreich abgeschlossenen Tests oder einer erfolgreich abgeschlossene Schulungsmaßnahme nachgewiesen werden muss, bevor eine Zugangsberechtigung zu einer Funktion oder eine andere gleichwertige Berechtigung erteilt wird. So kann beispielsweise durch den Benutzer zur Erlangung einer Berechtigung zur Ausführung der Funktion ein computerunterstütztes Training durchgeführt oder ein anderweitiger Nachweis einer Qualifikation erbracht werden und nach einem erfolgreichen Abschluss des Trainings oder einer Überprüfung der Qualifikation automatisch für diesen Benutzer ein Autorisierungszertifikat erstellt und signiert und dem Benutzer zur Verfügung gestellt werden. Für nicht-humane Nutzer ("Maschine"), beispielsweise im Kontext einer serviceorientierten Architektur oder einer Maschine-zu-Maschine-Kommunikation, kann das bedeuten, dass die Konfiguration das Vorhandensein von technischen Ressourcen betrifft, was nicht nur Performanceorientierte Aspekte (z.B. Speicher, Rechenleistung) haben muss, sondern auch beispielsweise die Ausstattung mit sicherheitsrelevanter Software (beispielsweise Malware- oder Virenschutz, Verschlüsselungstechnologie), der Nachweis einer korrekten Konfiguration von Firewalls oder insbesondere das Vorhandensein von sicherheitsrelevanten Zertifikaten betreffen kann. Es kann also als der Benutzer ein technisches Gerät ("Maschine") verwendet werden, wobei das technische Gerät mittels des Autorisierungszertifikats zur Nutzung der Funktion eingerichtet wird.

Ein Ausführungsbeispiel des erfindungsgemäßen Verfahrens wird nachfolgend anhand der Zeichnungen erläutert. Es dient gleichzeitig der Erläuterung eines erfindungsgemäßen Automatisierungssystems und eines erfindungsgemäßen Qualifizierungssystems (Trainingssystem, Testsystem).

Dabei zeigen:
- Figur 1: in schematischer Darstellung die Erstellung und Signatur eines Funktionszertifikates,
- Figur 2: in schematischer Darstellung die Erstellung eines Autorisierungszertifikates, hier nach Abschluss eines erfolgreichen Trainings eines Benutzers, und
- Figur 3: in schematischer Darstellung die Überprüfung eines Autorisierungszertifikates für einen Benutzer und die anschließende Freigabe des Zugriffs auf eine Funktion einer industriellen Anwendung.

Im Folgenden werden einige Begriffe eingeführt, die in der Erläuterung des Ausführungsbeispiels verwendet werden:
- RootCA (RCA): Übergeordnete allgemein anerkannte Zertifizierungsstelle, beispielweise des Anbieters VeriSign.
- ProducerCA (PCA): Zertifizierungstelle (ProducerCA = Producer Certificate Authority = Zertifizierungsinstanz des Herstellers) des Herstellers einer Applikation. Sie ist über die Zertifikatskette zu einer RootCA authentisiert.
- Funktionszertifikat (FC): Zertifikat für eine bestimmte Funktion in einer Applikation/Anwendung, welches von der ProducerCA signiert wird (FCU - unsigniertes Funktionszertifikat; FCS signiertes Funktionszertifikat) .
- ConsumerAuthorization (CCA): Zertifizierungsstelle des Betreibers der Applikation bzw. der Automatisierungskomponente. Auch sie ist über die Zertifikatskette zu einer RootCA authentisiert.
- Autorisierungszertifikat (AC): Zertifikat für einen bestimmten Benutzer und eine bestimmte Funktion der Applikation, das durch die ConsumerAuthorization (CCA) signiert wurde (ACU - unsigniertes Autorisierungszertifikat; ACS signiertes Autorisierungszertifikat).
- ConsumerAuthorizationAndAuthenticationAuthority: (CACA) Anwendung zur Verwaltung der Zugriffsberechtigungen der Benutzer und zur Beauftragung der Signierung des Autorisierungszertifikats.
- ZertifikateSpeicherZentral (CSS): Externe Einheit ("Certificate Store Server"), auf welcher Zertifikate abgelegt sind (z.B. IAM, ActiveDirectory, ...).
- ZertifikateSpeicherLokal (CSL): Speicher ("Certificate Store Local") der Automatisierungskomponente / Edge-Gerät, welcher für die Ablage von Zertifikaten verwendet wird.
- Zertifizierungskette (CK): Signierungsvorgang mit Zugriff auf eine übergeordnete Zertifizierungsinstanz, ggf. rekursiv und auf das Wurzel-Zertifikat (Root Zertifikat / RCA) bezogen.
- Qualifizierungssystem (TC): Trainingsstelle / Trainingscenter zur Qualifizierung bzw. Überprüfung der Qualifikation eines (humanen oder maschinellen) Benutzers als Voraussetzung für die Zugriffsberechtigung auf eine Funktion oder vergleichbares "asset".
- Benutzer (U): humaner oder maschineller Nutzer einer Anwendung und damit einer freizugebenden Funktion.
- Logon (LO): Anmeldevorgang eines Benutzers an einer Anwendung, wobei die Identität des Benutzers überprüft wird.
- Automatisierungskomponente (ED): Computer, insbesondere Edge-Gerät (Industrial Edge Device) oder andere Laufzeitumgebung zur Ausführung der Anwendung.
- Zertifikatsabruf (REQ-C): ruft beim zentralen Zertifikatsspeicher CSS für den angemeldeten Benutzer die verfügbaren Autorisierungszertifikate ab.
- Überprüfungsprozedur (VAL): "Validierung" ("Approval" - AP) des Autorisierungszertifikates (AP-ACS), des Funktionszertifikates (AP-FCS), einer im Autorisierungszertifikat eingebetteten oder "übersignierten" Benutzer-Autorisierung (AP-SCCA) und die Überprüfung von Zeitbeschränkungen (AP-TIM), insbesondere hinsichtich eines "Verfallsdatums" der jeweiligen Zertifikate und Signaturen.
- Nutzungsfreigabe (ENAB): schaltet nach allen Überprüfungen im Erfolgsfall die Funktion für den angemeldeten Benutzer frei.

Das beschriebene Verfahren lässt sich in 3 voneinander unabhängige Bereiche aufteilen:
Hersteller-Teil: Hersteller definiert und signiert die Funktion der Anwendung bzw. der Automatisierungs- / Edge-Komponente.

Autorisierungs-Teil: Autorisierungsstelle legt fest, wer die Funktion nutzen darf, und signiert diese.

Operations-Teil: Anwendung prüft die signierten Autorisierungen und schaltet die signierte Funktion frei.

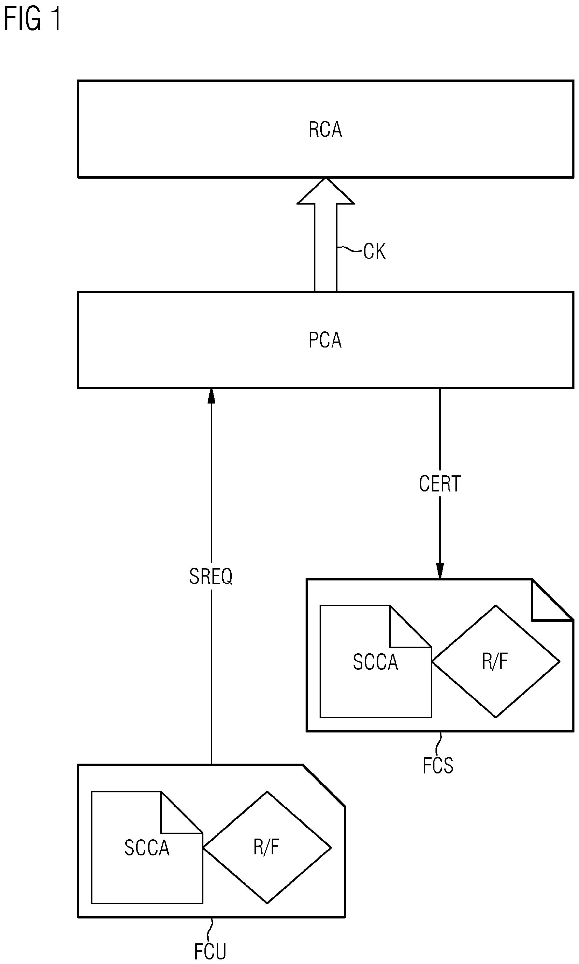

Die Figur 1 veranschaulicht den Hersteller-Teil des Verfahrens. Ein Engineering-System oder eine andere Verwaltungsinstanz meldet eine Funktion bei einer Autorisierungsstelle PCA (Producer CA) mittels eines Funktionszertifikats an. Dieses beinhaltet das öffentliche Zertifikat der Autorisierungsstelle CCA (Consumer Authorization CA) "Ich als Anwendung A.A des Herstellers H.A biete ab der Version V.A die Funktion F.A für autorisierte Benutzer der Autorisierungsstelle Consumer Authorization CA / CACA". Anhand der Zertifikatskette CK (hier: der "ProducerCA") ist die Authentizität des Zertifikates und seines Inhaltes sichergestellt. Dazu wird ein Funktionszertifikat FCU zu der Funktion erstellt, welches einen Hash-wert über den Programmcode der Anwendung oder zumidest der Funktion oder andere wesentliche Teile (z.B. Schnittstellen) und einen Indikator R/F (Role / Function) über die zu zertifizierende Berechtigung umfasst. Letztere beschreibt beispielsweise die freizugebende Funktion (z.B. Nutzung einer bestimmten Produktionsanlage) und der damit einhergehenden Berechtigung (Nutzung, Konfigurierung etc. oder Rolle oder Position des Mitarbeiters/Benutzers) und ggf. die dazu zu erfüllenden Voraussetzungen (z.B. erforderliche Qualifikation oder erforderliche technische Ausstattung / Ressourcen / Sicherheitslevel). Optional können auch örtliche/geographische Beschränkungen konfiguriert sein, die dann später bei der Nutzung der Funktion mit einer gesicherten Ortsinformation der Verwendungsstelle abgeglichen werden müssen.

Das zunächst unsignierte Funktionszertifikat FCU wird mit dem signierten öffentlichen Schlüssel SCCA der Autorisierungsstelle CCA (im Folgenden auch "erste Autorisierungsstelle" genannt) versehen und mit einer Signierungsanforderung SREQ an die Zertifizierungsstelle PCA des Herstellers (im Folgenden auch "zweite Autorisierungsstelle" genannt) gesendet. Die erste Autorisierungsstelle und die zweite Autorisierungsstelle (Autorisierungsstellen können auch als Zertifizierungsstellen bezeichnet werden), die auch identisch sein können, sind über eine Zertifizierungskette CK jeweils auf ein Root-Zertifikat einer zentralen Stelle RCA bezogen. Es kann sich - wie im vorliegenden Beispiel - um eine gemeinsame Zertifizierungsstelle RCA, in anderen Ausführungsformen aber auch um getrennte Dienstleister handeln. Als Ergebnis wird das signierte Funktionszertifikat FCS einer Autorisierungs- oder Zertifizierungsstelle CACA des Betreibers der Applikation bzw. der Automatisierungskomponente übermittelt bzw. dieser mittels eines Links zu einem Speicher zur Verfügung gestellt werden.

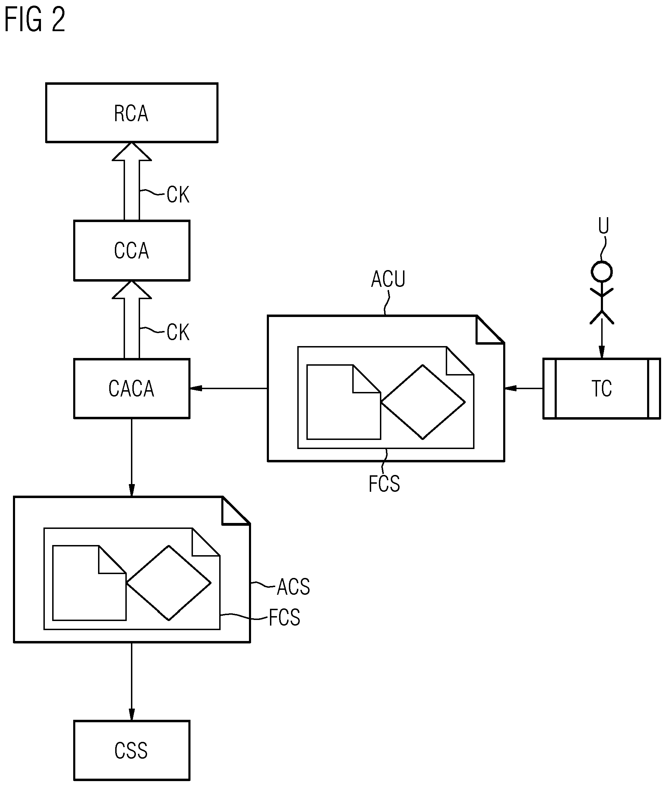

Die Figur 2 erläutert den Autorisierungs-Teil des Verfahrens. Für einen Benutzer U der Anwendung bzw. der Automatisierungskomponente ED wird nach Prüfung der Voraussetzungen (z.B. Abschluss eines Seminares) durch ein Qualifizierungssystem (Trainingssystem, Testsystem) TC ("Training-Center") ein Autorisierungszertifikat ACU erzeugt und mit Hilfe der Autorisierungsstelle CACA signiert, wobei das Autorisierungszertifikat ACU genau das vorherig genannte Funktionszertifikat FCS beinhaltet und als signiertes Autorisierungszertifikat ACS in einem zentralen Zertifikatespeicher CSS (z.B. IAM, AD, ...) hinterlegt und/oder dem Benutzer über einen weiteren Kommunikationskanal (z.B. E-Mail) zur Verfügung gestellt wird. Der Benutzer U wird somit an die vom Hersteller spezifizierte Funktion gebunden. Das Autorisierungszertifikat ACU wird dazu mit einer Identifikation des Benutzers versehen; dies kann vor der Signatur durch die Autorisierungs- oder Zertifizierungsstelle CCA bzw. vor der Signatur des Autorisierungszertifikates ACU mit dem Schlüssel der Zertifizierungsstelle CCA durch die Autorisierungsstelle CACA (je nach Organisation des Signaturvorganges) geschehen, so dass die Identifikation des Benutzers U mit-signiert (also die eingebettete Identifikation des Benutzers durch die Signatur umfasst und geschützt) ist. In der hier diskutierten vorteilhaften Variante werden jedoch der oder die Benutzer U durch eine Signatur des signiertes Autorisierungszertifikates ACS mit einem dem jeweiligen Benutzer U zugeordneten privaten Schlüssel mit dem Autorisierungszertifikat ACS verknüpft, so dass die Hinzufügung eines weiteren Benutzers zum bereits signierten Autorisierungszertifikat ACS durch sog. "Übersignieren" möglich ist, ohne bisherige Signaturen zu invalidieren. Zu diesem Zweck generiert das Trainingscenter, ggf. im Zusammenwirken mit der Zertifizierungsstelle CCA oder einer anderen Zertifizierungsinstanz, private Schlüssel für Benutzer U, oder greift auf ein externes Schlüssel- "Repository" zu.

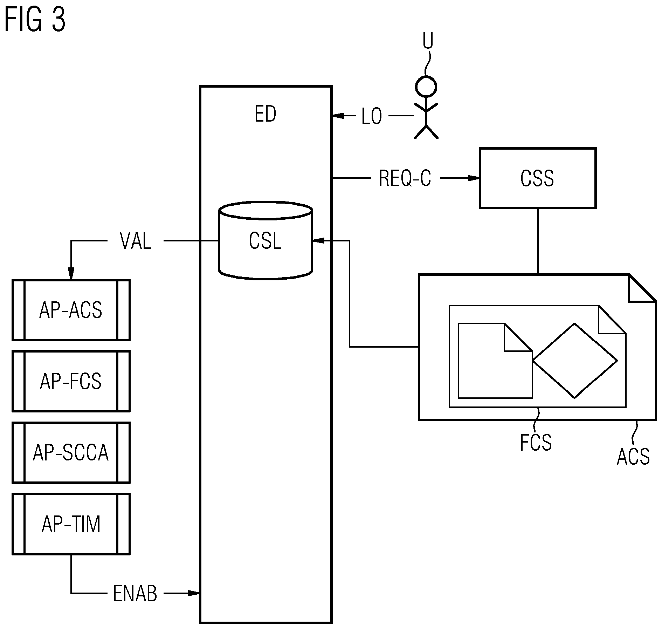

Die Figur 3 illustriert den Operations-Teil des Verfahrens. Meldet sich der Benutzer U an einer (Edge-)Anwendung mittels einer Anmeldeprozedur LO (Log-On) an, werden die dem Benutzer U zugeordneten Autorisierungszertifikate ACS auf das entsprechende Automatisierungskomponente ED (Edge-Gerät) in einem Abfrageschritt REQ-S (Request Signaturen) übertragen bzw. aktualisiert. Im Falle einer Nichtverfügbarkeit des zentralen Zertifikatespeichers CSS werden die im lokalen Zertifikatespeicher CSL bereits vorhandenen Autorisierungszertifikate ACS genutzt. Sind für den Benutzer U keine Autorisierungszertifikate vorhanden, kann der Benutzer das Autorisierungszertifikat (was er z.B. über den weiteren Kommunikationskanal erhalten hat) auf die Automatisierungskomponente ED (Edge-Gerät) manuell selbst oder über einen Dritten übertragen. Spätestens mit dem Start der Anwendung prüft die Automatisierungskomponente ED oder die Anwendung die Identität des Benutzers U durch Auswertung der Logon-Daten (z.B. Passwort, biometrische Merkmale oder Multi-Faktor-Authentifizierung) und überprüft das für die aktuell angeforderte oder verfügbare Funktion in einer Prüfungsprozedur VAL, wobei in wahlfreier Reihenfolge eine Prüfung AP-ACS ("Approval Autorisierungszertikat Signiert") des Autorisierungszertikates, eine Prüfung AP-FCS des Funktionszertifikates, eine Prüfung AP-SCCA des im Funktionszertifikat FCS integrierten signierten Schlüssels der ersten Zertifizierungsstelle CCA (dieser Schritt kann in einigen Ausführungsformen optional sein) und eine (ebenfalls optionale) Prüfung AP-TIM von zeitlichen Beschränkungen (insbesondere der maximalen Gültigkeitsdauer von Signaturen und Zertifikaten) erfolgt. Nach erfolgreicher Prüfung erhält oder generiert die Anwendung die Freigabe ENAB (das kann eine Nachricht oder ein anderes Datensignal sein) für die Funktion zur Nutzung durch den betreffenden Benutzer U. Zur Prüfung der Signaturen und Zertifikate können auf der Automatisierungskomponente vertrauenswürdige Zertifikate, die von der hierarchisch übergeordneten Zertifizierungsstelle bereitgestellt wurden, gespeichert sein, so dass die Prüfung lokal erfolgen kann.

Durch die Verwendung von Zertifikaten zur Freigabe von Funktionen oder allgemein "Assets" ist es egal, über welchen Weg das Zertifikat auf dem Edge-Gerät bzw. Automatisierungskomponente zur Verfügung gestellt wird. Es ist keine Verbindung zu dedizierten Diensten (wie "ActiveDirectory") zwingend notwendig. Da diese Zertifikate anhand der Zertifizierungsstelle und Zertifizierungskette authentisiert sind, besteht kein Sicherheitsrisiko gegen Verfälschung. Lediglich vom Hersteller spezifizierte Funktionen für den Operationsteil werden spezifisch für berechtigte bzw. qualifizierte Benutzer freigeschaltet.

Vorteilhaft ist, dass der Hersteller ein signiertes Funktionszertifikat FCS anbietet, welches über eine Autorisierungsstelle CACA in ein signiertes Autorisierungszertifikat ACS für den jeweiligen Benutzer U verpackt wird. Im Funktionszertifikat FCS ist ebenfalls das Zertifikat der autorisierten Autorisierungsstelle CCA enthalten und durch eine einfache Überprüfung in der Anwendung verifizierbar. Lediglich die Anwendung (Applikation) prüft die Gültigkeit des Autorisierungszertifikates ACS anhand seiner Zertifikatskette CK (hier über die Consumer-Authorization CCA verkettet), die Gültigkeit des im Autorisierungszertifikats ACS enthaltenen Funktionszertifikats FCS über die Zertifikatskette CK (hier über die ProducerCA PCA verkettet), die Übereinstimmung im Funktionszertifikat enthaltenen Zertifikat SCCA der Autorisierungsstelle CCA mit der tatsächlichen ConsumerAuthorization CA (oder dessen Zertifikationskette; damit ist gewährleistet das nicht irgendwelche "fremden" Consumer-CA Benutzer U freischalten), die Gültigkeiten der genannten Zertifikate auf Gültigkeitsdauer und Widerrufslisten (oder Positivlisten). Das Verfahren ist agnostisch zu APIs und anderen Schnittstellen, da lediglich die Zertifikate anhand der Zertifikatskette überprüft werden. Dies ist vor allem bei Anwendungen industrieller Edge-Geräte und deren "Offline-Modus" von Vorteil, da dies bereits mit zur Verfügung gestellten Betriebssystemmitteln möglich ist. Das manuelle Einspielen von Autorisierungszertifikaten ACS durch den Benutzer U bzw. Dritte ist unkritisch, da Autorisierungszertifikate ACS erst nach Prüfung von einer Autorisierungsstelle CCA/CACA signiert werden und deren Authentizität gewährleistet ist. Im offline-Modus (zentraler Zertifikatsspeicher ist nicht verfügbar) kann auch eine nicht autorisierte "Rolle" (z.B. der Benutzer U) ein neues Autorisierungszertifikat ACS (inkl. Funktionszertifikat FCS; vergleichbar mit einem Ausweis) einspielen. Durch die Gültigkeitsdauer von Funktionszertifikaten FCS sind Zugriffe auf Funktionen zeitlich limitierbar. Das gleiche gilt auch für Autorisierungszertifikate ACS.

Alle Zertifikate (z.B. Authentifizierungszertifikat als auch das Funktionszertifikat) können über Standardprotokolle widerrufen werden. Es braucht kein Rollenmanagement in der (Edge-) Anwendung erfolgen, da sie nur die Funktion und den Benutzer anhand von Autorisierungszertifikat, Autorisierungsstelle und Funktionszertifikat überprüft, welche vom Hersteller bzw. einer anderen verantwortlichen Stelle (z.B. nach Schulung) zur Verfügung gestellt wurden. Die Applikation weiß durch die Zertifikatskette CK (Certificate Chain), dass die Freischaltung wirklich für die Funktion des Herstellers ist und nicht von einem Angreifer erstellt wurde (ZertifikatsKette -> Zertifikat -> RootCA).

## Patentansprüche

1. Verfahren zur benutzerbezogenen Freischaltung einer Funktion einer Anwendung einer industriellen Automatisierungskomponente (ED), insbesondere eines industriellen Edge-Gerätes, wobei anhand einer benutzerbezogenen Autorisierung durch die Automatisierungskomponente (ED) oder die Anwendung beim Zugriff auf die Funktion entschieden wird, ob ein Benutzer (U) diese Funktion ausführen darf, und danach die Funktion dem Benutzer zur Verfügung gestellt wird,
**dadurch gekennzeichnet, dass**
in einem ersten Schritt zu der Funktion ein digitales Funktionszertifikat (FCU) erstellt wird,
in einem zweiten Schritt das Funktionszertifikat (FCU) signiert wird,
in einem dritten Schritt für einen oder jeden berechtigten Benutzer der Funktion ein Autorisierungszertifikat (ACU) erstellt wird, wobei eine Identifikation des Benutzers oder der Benutzer und das signierte Funktionszertifikat (FCS) in das Autorisierungszertifikat (ACU) eingebettet werden,
dass in einem vierten Schritt das Autorisierungszertifikat (ACU) mit dem eingebetteten Funktionszertifikat (FCS) und der eingebetteten Identifikation signiert wird,
dass in einem fünften Schritt das signierte Autorisierungszertifikat (ACS) auf die Automatisierungskomponente (ED) übertragen oder dieser mittels eines zentralen Speichers zur Verfügung gestellt wird, und
dass in einem sechsten Schritt durch die Automatisierungskomponente (ED) oder durch die Anwendung die Gültigkeit des Autorisierungszertifikates (ACS) geprüft und die Identität des an der Automatisierungskomponente (ED) angemeldeten Benutzers (U) mit der Identifikation im Autorisierungszertifikat (ACS) verglichen wird und im Falle einer erfolgreichen Prüfung und Vergleich die Funktion dem Benutzer (U) freigeschaltet wird.

2. Verfahren nach Patentanspruch 1,
**dadurch gekennzeichnet,**
**dass** in dem ersten Schritt in das Funktionszertifikat (FCU) ein signierter öffentlicher Schlüssel einer ersten Autorisierungsstelle (CCA) eingebettet wird und in dem zweiten Schritt die Signierung des Funktionszertifikates (FCU) durch eine zweite Autorisierungsstelle (PCA) erfolgt.

3. Verfahren nach Patentanspruch 2,
**dadurch gekennzeichnet,**
**dass** in dem vierten Schritt die Gültigkeit der eingebetteten Signatur der ersten Autorisierungsstelle (CCA) überprüft wird und das Autorisierungszertifikat (ACS) durch die erste Autorisierungsstelle (CCA) signiert wird.

4. Verfahren nach einem der vorhergehenden Patentansprüche, **dadurch gekennzeichnet,**
**dass** in dem dritten Schritt die Identifikation des Benutzers (U) eingebettet wird, indem das Autorisierungszertifikat (ACS) jeweils mit einem Schlüssel oder Zertifikat des betreffenden Benutzers (U) signiert wird.

5. Verfahren nach einem der vorhergehenden Patentansprüche, **dadurch gekennzeichnet,**
**dass** in dem dritten Schritt vor dem Hinzufügen der Identifikation des Benutzers (U) der Nachweis über eine der Funktion zugeordneten Qualifikation des Benutzers (U) überprüft wird.

6. Verfahren nach einem der vorhergehenden Patentansprüche, **dadurch gekennzeichnet,**
**dass** durch den Benutzer (U) zur Erlangung einer Berechtigung zur Ausführung der Funktion ein computerunterstütztes Training durchgeführt oder ein anderweitiger Nachweis einer Qualifikation erbracht wird und nach einem erfolgreichen Abschluss des Trainings oder einer Überprüfung der Qualifikation automatisch für diesen Benutzer (U) ein Autorisierungszertifikat (ACS) erstellt und signiert und dem Benutzer (U) zur Verfügung gestellt wird.

7. Verfahren nach einem der vorhergehenden Patentansprüche, **dadurch gekennzeichnet,**
**dass** als der Benutzer (U) ein technisches Gerät verwendet wird, wobei das technische Gerät mittels des Autorisierungszertifikates (ACS) zur Nutzung der Funktion eingerichtet wird.

8. Industrielles Automatisierungssystem,
mit einem Engineeringssystem zur Erstellung oder Verwaltung einer industriellen Anwendung mit zumindest einer Funktion, **dadurch gekennzeichnet,**
**dass** das Automatisierungssystem zur Durchführung eines der Verfahren aus den Patentansprüchen 1 bis 7 eingerichtet ist.

9. Qualifizierungssystem (TC) für einen Benutzer einer industriellen Automatisierungskomponente (ED),
wobei für den an dem Qualifizierungssystem (TC) registrierte Benutzer (U) für die Berechtigung der Nutzung zumindest einer Funktion einer Anwendung der Automatisierungskomponente (ED) ein der Funktion zugeordnetes Trainingsprogramm verfügbar ist,
**dadurch gekennzeichnet,**
**dass** in dem Qualifizierungssystem (TC) nach einem erfolgreichen Abschluss des Trainings für diesen Benutzer (U) die Durchführung des dritten, vierten und fünften Schrittes des Verfahrens nach Patentanspruch 1 vorgesehen ist.
